# EUROPEAN PATENT SPECIFICATION

(11) **EP 1 834 928 B1**
(45) Date of publication and mention of the grant of the patent: **05.10.2011**
(21) Application number: 05825261.0
(22) Date of filing: 01.12.2005
(51) Int. Cl.: C02F 1/72, B01J 3/00

(54) **SYSTEM AND METHOD FOR THE HYDROTHERMAL OXIDATION OF WATER-INSOLUBLE ORGANIC RESIDUES**
SYSTEM UND VERFAHREN ZUR HYDROTHERMALEN OXIDATION VON WASSERUNLÖSLICHEN ORGANISCHEN RÜCKSTÄNDEN
SYSTEME ET PROCEDE DESTINES A L'OXYDATION HYDROTHERMIQUE DE RESIDUS ORGANIQUES INSOLUBLES DANS L'EAU

(30) Priority: 03.12.2004 ES 200402914
(43) Date of publication of application: 19.09.2007
(73) Proprietor: Universidad de Cadiz, 11001 Cadiz (ES)
(72) Inventor: MARTINEZ DE LA OSSA FERNÁNDEZ, Enrique, E-11510 Puerto Real, Cádiz (ES); NEBOT SANZ, Enrique Dpto. Ingeniera Quimica, E-11510 Puerto Real, Cádiz (ES); PORTELA MIGUELEZ, Juan Ram n, E-11510 Puerto Real, Cádiz (ES); SÁNCHEZ ONETO, Jezabel, E-11510 Puerto Real, Cádiz (ES)
(74) Representative: Bernardo Noriega, Francisco
(86) International application number: PCT/ES2005/000661
(87) International publication number: WO 2006/061448

(56) References cited:
- JP-A- 10 137 775
- JP-A- 2003 236 568
- JP-A- 2004 033 915
- US-A- 5 667 698
- US-A- 5 674 405
- US-A- 5 720 889
- PORTELA JR. ET AL: 'Elimination of cutting oil wastes by promoted hydrothermal oxidation.' JOURNAL OF HAZARDOUS MATERIALS B88. 2001, pages 95 - 106, XP008119234

## Description

### Field of the Art

The present invention is comprised within the technical sector of waste water treatment methods, more specifically in the sector relating to the treatment by hydrothermal oxidation of water-insoluble residues, such as oily residues.

### Background of the Invention

The supercritical water oxidation process is an innovative technology for the treatment of residues, in which the organic matter present in the aqueous phase is completely oxidized. When water in conditions of pressure and temperature that are greater than its critical point (221 bar and 374°C) is used, it is possible to obtain a single homogeneous reaction phase in which the organic compounds and oxygen are in close contact, therefore the oxidation process takes place without interfacial mass transfer limitations, which considerably increases the effective reaction rate. Oxidation reactions thus take place in reaction times of the order of seconds, mainly CO₂ and H₂O being obtained as products, without the formation of NOₓ, CO or other incomplete oxidation products.

The process has been tested with different residues such as industrial or urban sludge, as described in US 4,113,446; US 4,338,119; US 4,543,190; PCT/US92/02490; PCT/US92/02489; using oxygen or air as oxidizing materials. Japanese patent application JP2003236568 describes a process for the supercritical oxidation of liquid waste in which hydrogen peroxide is used as oxidant.

One of the main drawbacks of these processes is that inorganic compounds are not very soluble in supercritical conditions, their precipitation occurring, which may cause the clogging of the reactor, the decrease in heat transfer and other operating problems. To solve this drawback, US 4,822,497 describes a commercial method for carrying out supercritical oxidation in a tank reactor, in which an aqueous stream containing the chemical residue is treated. This stream is pressurized and introduced in the upper area of the reactor together with oxygen or air. The reactor operates under supercritical conditions in the upper area and under subcritical conditions in the lower area in which the elimination of the insoluble solids in supercritical conditions is allowed since the water is in subcritical conditions.

From the technical point of view the severe operating conditions can cause severe corrosion problems. The scientific community is therefore carrying out a great research effort to solve said problems, using different reactor configurations or materials with a high corrosion resistance, as can be seen in US 5,358,645; US 5,461,648; US 5,552,039; EP 689 868; US 5,545,337. Spanish patent ES 2,108,627 proposes a refrigerated wall shell system providing lower cost reactors as it is not necessary for its pressurized shell to withstand the oxidizing environment and because said shell is at a lower temperature than that of the oxidation process.

There is a series of patents focused on different techniques for injecting the feed and the oxidant for the purpose of optimizing the addition and the contact of the streams entering the reaction system. WO 97/29050 proposes an injection system with a concentric arrangement. A stream of combustible material is injected in the central part, the stream of residue surrounding such stream and acting as a shield against the oxidant to be treated, and the oxidant is injected in the outer circle. It is thus intended that high point temperatures are not reached, which would cause damages in the reactor, precipitations and other damages. US 5,670,040 is focused on protecting the hydrothermal reactor walls to prevent precipitations and corrosion. Other patents describing modifications in the injection system are: US 5,106,513, WO 97/05069, US 4,338,199, US 2,944,396. US 2003189012 proposes adding oxygen at several points of the reactor, such that a better oxidant distribution is achieved. A better temperature distribution is thus obtained throughout the reactor, starting below 250°C at the entrance thereof and progressively increasing as the exothermic reaction takes place with successive oxygen additions, until reaching temperatures that are not greater than 530°C.

### Description of the Invention

The present invention proposes a system for hydrothermal oxidation with the capacity to treat aqueous organic residues (water-soluble or water-emulsifiable) and water-insoluble organic residues. To that end, it comprises two independent liquid phase feed lines, the first of which is provided for an aqueous phase (water-soluble or water-emulsifiable residue), and the second feed line allows supplying the reactor with a liquid stream of non-water-soluble residue (oily residue or water-insoluble organic compounds).

Standard hydrothermal oxidation processes allow the effective treatment of mainly organic industrial residues which are present in aqueous phase, in which the contaminants are dissolved in an emulsified form or in the form of sludges. However, the possibility of directly injecting a water-insoluble residue, such as oil or oil-type residues, in the reactor is not contemplated. The injection of oily residue by means of an independent feed line eliminates the problems associated to pumping a two-phase mixture and allows a better control of the addition of combustible material and therefore of the stability of the oxidation process.

Only the first line would be used if the residue is water-soluble and has sufficient calorific value so that the heat generated in the reaction allows operating in autothermal conditions. The aqueous residue is passed through a pump raising the pressure to the supercritical reaction conditions, and it later passes through a concentric-tube heat exchanger in which it will be preheated by the hot reaction effluent. Once preheated, it is introduced in the first reactor in which it is mixed with the stream of pressurized and preheated air, such that the oxidation reaction begins. Since this reaction is very exothermic, depending on the calorific value of the residue and on its concentration, the heat produced is used to preheat the liquid and air supplies. In the event that the calorific value of the aqueous residue were insufficient, another organic residue could be injected through the second line, which residue will act as a fuel and will implement the calorific value of the mixture until reaching the thermal self-maintenance value.

The second liquid feed line is also used if the residue is not water-soluble (for example oily type residues). Water or preferably an aqueous residue with insufficient calorific value pressurized and preheated until the operating conditions circulates through the first line, whereas the water-insoluble residue is pumped through the other line at the same pressure (at a flow rate comprised between 1 and 10% of the flow rate of the aqueous stream), being directly introduced without undergoing preheating in a mixing device in which it is contacted with the stream of water in supercritical conditions, therefore a supercritical phase in which the second stream (with an oily nature) is completely soluble is obtained. The oxidant (the pressurized and preheated stream of air) is then introduced and the reaction begins. It is thus possible to carry out the oxidation of water-insoluble industrial residues for which standard hydrothermal oxidation techniques cannot be applied. Furthermore, since it is possible to pump the residual stream in the absence of water, it reduces the power of the high-pressure pump of said feed line, and it is possible to better control the organic load supplied to the reactor. On the other hand, in the event of overpressure and excess temperature in the system, the stopping of said feed by the control system, while the introduction of the aqueous stream is maintained, favors the reestablishment of safe conditions without needing to completely stop the plant.

The system consists of three tubular-type reactors connected in series, the length/inner diameter ratio being greater than 200 so as to ensure a piston-type flow regime. The reactors are made of corrosion-resistant steel alloy and are heat-insulated to operate in adiabatic conditions. They have several thermocouples which allow recording the temperature, following and controlling the reaction. Mixing devices are arranged in the connections between the reactors, which devices allow injecting aqueous streams of hydrogen peroxide, although other additives can be added if it is considered to be necessary according to the development of the reaction. A non-preheated stream of hydrogen peroxide can thus be injected in the entrance of the second and third reactors, which stream acts as a free radical generator potentiating the oxidation reaction in the event that the residue contains material resistant to oxidation, in addition to forming an additional source of oxygen. The addition of a non-preheated aqueous stream through these connections further favors the thermal control of the system, preventing an abrupt temperature rise at the addition points.

In order to make use of the energy generated during the oxidation process, the hydrothermal oxidation plant is equipped with concentric-tube heat exchangers which allow preheating the aqueous feed stream and the stream of air with the final effluent of the oxidation reactor. In these exchangers, the final hot effluent circulates through the inner tube and the fluids to be heated; the feed stream and the oxidizing air circulate through the annular space between the inner tube and the outer tube. The heat exchangers are heat-insulated in their outer surface for the purpose of preventing the heat losses to the outside. In order to evacuate the possible excess heat from the final stream and allow the discharge thereof, it is passed through a plate heat exchanger that is refrigerated by the water feed network. Once the stream is cold, it is depressurized through a pressure control valve and is led to a gas-liquid separating tank. From this tank, the liquid phase leaves through the lower part by gravity and the gaseous phase, the remaining air together with the gases produced in the oxidation, escape through the upper part. Both outlets have sample-taking devices to allow their analysis and monitor the extent of the oxidative treatment.

To start the reaction, the plant has electric resistances wound on to a section of the pipe through which the aqueous phase circulates with a flow rate between 10 and 20% of the design flow rate, prior to its entrance in the reactor. This device allows heating it to a temperature of about 400°C. The hot aqueous stream is mixed with the sufficient air flow rate to oxidize all the organic matter present, such that the reaction begins. As the reaction takes place and heat is released, it is possible to progressively increase the flow rates of the liquid and gaseous streams, until it is finally possible to work at full load and disconnect the electric heating.

The plant is equipped with temperature, pressure, liquid flow rate and air flow rate sensors and different level sensors for the water and residue tanks. The main equipment further allows the control by means of an automaton: feed pump and additive pump, air compressor and electrically-operated valves. The method can be registered, monitored and controlled by means of developed control software, such that the efficiency of the oxidation is maximum and at the same time the operation is in high safety conditions.

### Brief Description of the Drawings

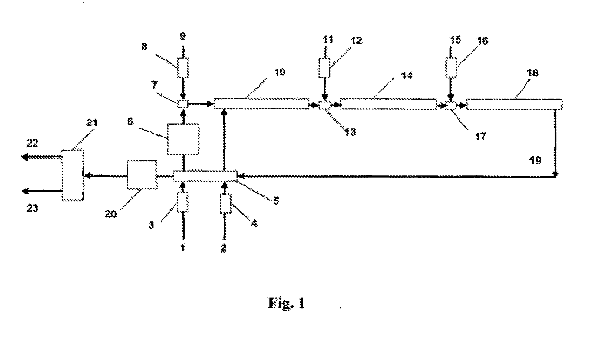

Figure 1 shows a scheme of a system for the hydrothermal oxidation of water-insoluble organic residues according to the present invention. Each of the elements forming the system is listed below:
   1. Residue (aqueous stream).
   2. Air.
   3. High-pressure pump.
   4. Compressor.
   5. Heat exchanger.
   6. Electric resistances.
   7. Mixer.
   8. High-pressure pump.
   9. Water-insoluble residue
   10.First reactor.
   11.Aqueous stream of hydrogen peroxide.
   12.High-pressure pump.
   13.Connection between reactor sections
   14.Second reactor.
   15.Aqueous stream of hydrogen peroxide.
   16.High-pressure pump.
   17.Connection between reactor sections
   18.Third reactor.
   19.Oxidized effluent.
   20.Depressurizing and cooling device.
   21.Gas-liquid separator.
   22.Gaseous stream.
   23.Purified residue.

### Description of an Embodiment of the Invention

Two operation examples of the invention are described below, with reference to the numbers adopted in the Figure.
**Example 1:** Water-soluble or water-emulsifiable residue. The stream formed by said residue (1) is pressurized at 250 bar by means of a high-pressure pump (3) at the flow rate previously set according to the organic load of the residue. Said pressurized stream is passed through a heat exchanger (5) in countercourrent stream with the reaction effluent (19) circulating at a temperature between 500 and 550°C, such that the feed reaches 400°C. If it is the start of the reaction, the preheating would be carried out through electric resistances (6) which would only be disconnected once the exothermic reaction generates the necessary heat for the system to be energetically self-maintained. In the event that the calorific value of the stream (1) were insufficient to self-maintain the reaction, there is the possibility of introducing another stream (9) of an easily oxidizable material which would act as an additional fuel by means of a high-pressure pump (8). Before entering the first reactor (10), the feed lines (1 and 9) are introduced in a mixer (7) to form a homogenous phase. Air (2) pressurized at 250 bar by means of a compressor (4) and preheated in the heat exchanger (5) would then be injected. The oxidation reaction would take place in three reactor sections (10, 14 and 18) . If necessary, two aqueous streams of hydrogen peroxide (11 and 15) (or other oxidation-promoting additives) can be added by means of high-pressure pumps (12 and 16) in the connections between reactor sections (13 and 17). Once it has been cooled in the exchanger (5), the oxidized effluent (19) is depressurized and cooled to room temperature by means of a device (20) including a plate exchanger and a pressure control valve. The stream finally passes through a gas-liquid separator (21), from which there leaves a liquid stream consisting of the purified residue (23) and a gaseous stream (22) formed by the remaining air and the oxidation gases (mainly CO₂).
**Example 2:** Non-water-soluble and non-water-emulsifiable residue. The stream formed by pure water or by a little concentrated soluble residue (1) is pressurized at 250 bar by means of a pump (3) at the design flow rate. The pressurized stream is passed through a heat exchanger (5) in counter-courrent stream with the reaction effluent (19) circulating at high temperature, such that 400°C is reached. If it is the start of the reaction, the preheating would be carried out through electric resistances (6) which would be disconnected once the exothermic oxidation reaction takes place. The water-insoluble residue (9) is pressurized at 250 bar and pumped through a high-pressure pump (8). Since they are in supercritical conditions, the feed streams (1 and 9) are perfectly mixed in a single phase and air (2) pressurized by the compressor (4) and preheated in a heat exchanger (5) is then injected. The reaming steps are similar to those described in Example 1.

A pilot plant has been constructed with a design that is equivalent to that of Figure 1 for oxidation in supercritical conditions of oily residues. The plant operates at 250 bar of pressure and in a temperature range from 400 to 550°C, allowing the operation with a flow rate of up to 20 kg/h of liquid stream. The method has been satisfactorily tested with soluble residues (phenolic water and vinasse) and oily residues (cutting oil and fuel oil).

## Claims

1. A system for the hydrothermal oxidation of water-insoluble organic residues comprising:
- three tubular reactors connected in series, with a stream injection system at the entrance and outlet of each of them,
- a feed system of an aqueous stream by means of a high-pressure pump with an adjustable flow rate,
- a feed system of a water-insoluble stream by means of a high-pressure pump with an adjustable flow rate,
- a feed system of a stream of air by means of a high-pressure compressor with an adjustable flow rate,
- a feed system of two streams of hydrogen peroxide by means of a high-pressure pump with an adjustable flow rate,
- a system for preheating the aqueous stream by means of electric resistances for starting the oxidation process,
- a concentric-tube heat exchange system for making use of the heat generated in the reactors,
- a system for conditioning the final effluent for its discharge by means of cooling, depressurizing and separating the gas and liquid phases.

2. System for the hydrothermal oxidation of water-insoluble organic residues according to claim 1, **characterized in that** each of the tubular reactors forming the system has a length/inner diameter ratio that is greater than 200, and are constructed in corrosion-resistant steel alloy and externally insulated to minimize heat losses.

3. System for the hydrothermal oxidation of water-insoluble organic residues according to claim 1, **characterized in that** the system for supplying the water-insoluble stream allows introducing a water-free residue, with a flow rate between 1 and 10% of the flow rate corresponding to the aqueous stream, at 250 bar by means of a high-pressure pump with an adjustable flow rate.

4. System for the hydrothermal oxidation of water-insoluble organic residues according to claim 1, **characterized in that** the mixing devices used in the injection system at the entrance of the second reactor and the third reactor for injecting a non-preheated stream of hydrogen peroxide introduce the additive stream in a direction perpendicular to the main stream of the system.

5. System for the hydrothermal oxidation of water-insoluble organic residues according to claim 1, **characterized in that** the concentric-tube heat exchange system makes use of the energy by means of the countercourrent stream circulation of the effluent and the aqueous stream, allowing to raise the temperature of the aqueous stream from room temperature to at least 400°C.

6. System for the hydrothermal oxidation of water-insoluble organic residues according to claims 1 and 5, **characterized in that** the heating fluid of the concentric-tube heat exchange system circulates through the inner tube and the fluid to be heated circulates through the annular space between the inner tube and the outer tube, the exchanger being heat-insulated in its outer surface to maximize the energetic use.

7. A method for the hydrothermal oxidation of water-insoluble organic residues which, using the system described in claims 1 to 6, is **characterized in that** the insoluble residue is mixed, without prior heating, with the stream of water in supercritical conditions before being introduced in the first reactor, a perfectly miscible feed being obtained to which the stream of preheated air at a pressure of 250 bar is later added.

8. A method for the hydrothermal oxidation of water-insoluble organic residues which, using the system described in claims 1 to 6, is **characterized by** a system starting protocol initiating the operation with the addition of flow rates between 10 and 20% of the maximum design flow rate, the aqueous stream being electrically preheated and as the reaction releases heat, all the feed flow rates increase progressively until reaching the autothermal conditions at full operation, at which time the electric preheating is disconnected.

9. A method for the hydrothermal oxidation of water-insoluble organic residues which, using the system described in claims 1 to 6, is **characterized by** being equipped with mixing devices between every two reactor sections allowing the possibility of injecting streams of hydrogen peroxide in two intermediate points of the reactor, which streams act as an additional source of oxygen and a free radical generator, such that the oxidation reaction is potentiated in the event that the residue is especially resistant to oxidation.

## Patentansprüche

1. System zur hydrothermalen Oxidation wasserunlöslicher organischer Rückstände, umfassend:
- drei in Reihe geschaltete Rohrreaktoren mit einem Strom-Einspritzsystem am jeweiligen Eingang und Ausgang,
- ein System zur Zufuhr eines wässrigen Stroms mittels einer Hochdruckpumpe mit einstellbarem Durchfluss,
- ein System zur Zufuhr eines wasserunlöslichen Stroms mittels einer Hochdruckpumpe mit einstellbarem Durchfluss,
- ein System zur Zufuhr eines Luftstroms mittels eines Hochdruckverdichters mit einstellbarem Durchfluss,
- ein System zur Zufuhr von zwei Wasserstoffperoxid-Strömen mittels einer Hochdruckpumpe mit einstellbarem Durchfluss,
- ein System zum Vorheizen des wässrigen Stroms mittels elektrischen Widerständen zum Starten des Oxidationsprozesses,
- ein Mantelrohr-Wärmetauschersystem zur Nutzung der in den Reaktoren erzeugten Wärme,
- ein System zur Konditionierung des abfließenden Abwassers zu dessen Entsorgung durch Kühlen, Druckerniedrigung und Trennung der Gas- und Flüssigphase.

2. System zur hydrothermalen Oxidation wasserunlöslicher organischer Rückstände nach Anspruch 1, **dadurch gekennzeichnet, dass** jeder der das System bildenden Rohrreaktoren ein Verhältnis von Länge zu innerem Durchmesser von mehr als 200 aufweist, aus korrosionsbeständiger Stahllegierung aufgebaut ist und zur Minimierung von Wärmeverlusten außen isoliert ist.

3. System zur hydrothermalen Oxidation wasserunlöslicher organischer Rückstände nach Anspruch 1, **dadurch gekennzeichnet, dass** das System zur Zufuhr des wasserunlöslichen Stroms das Einbringen eines wasserfreien Rückstands mit 1 bis 10% einem Durchfluss, relativ zum Durchfluss des wässrigen Stroms, bei 250 bar mittels einer Hochdruckpumpe mit einstellbarem Durchfluss gestattet.

4. System zur hydrothermalen Oxidation wasserunlöslicher organischer Rückstände nach Anspruch 1, **dadurch gekennzeichnet, dass** die Mischvorrichtungen, die im Einspritzsystem am Eingang des zweiten Reaktors und des dritten Reaktors zum Einspritzen eines nicht vorgeheizten Wasserstoffperoxidstroms verwendet werden, den Additivstrom in einer Richtung senkrecht zum Hauptstrom des Systems einbringen.

5. System zur hydrothermalen Oxidation wasserunlöslicher organischer Rückstände nach Anspruch 1, **dadurch gekennzeichnet, dass** das Mantelrohr-Wärmetauschersystem die Energie nutzt, indem man das Abwasser und den wässrigen Strom im Gegenstrom zirkuliert, wobei man die Temperatur des wässrigen Stroms von Raumtemperatur auf wenigstens 400°C steigen lässt.

6. System zur hydrothermalen Oxidation wasserunlöslicher organischer Rückstände nach den Ansprüchen 1 und 5, **dadurch gekennzeichnet, dass** das Heizfluid des Mantelrohr-Wärmetauschersystems durch das innere Rohr und das zu erwärmende Fluid durch den Ringspalt zwischen dem inneren Rohr und dem Mantelrohr zirkuliert, wobei der Wärmetauscher an seiner äußeren Oberfläche zur Maximierung der Energienutzung wärmeisoliert ist.

7. Verfahren zur hydrothermalen Oxidation wasserunlöslicher organischer Rückstände unter Verwendung des in den Ansprüchen 1 bis 6 beschriebenen Systems, **dadurch gekennzeichnet, dass** man den unlöslichen Rückstand vor dem Einbringen in den ersten Reaktor ohne vorheriges Erwärmen mit dem Wasserstrom unter überkritischen Bedingungen mischt, wobei man einen vollständig mischbaren Zulauf erhält, den man anschließend mit dem Strom vorerwärmter Luft bei einem Druck von 250 bar versetzt.

8. Verfahren zur hydrothermalen Oxidation wasserunlöslicher organischer Rückstände unter Verwendung des in den Ansprüchen 1 bis 6 beschriebenen Systems, **gekennzeichnet durch** ein Systemanfahrprotokoll, bei dem man den Betrieb **durch** Zufuhr von 10 bis 20% der maximal ausgelegten Durchflüsse startet, wobei man den wässrigen Strom elektrisch vorerwärmt und, sobald die Reaktion Wärme freisetzt, alle Zufuhr-Durchflüsse zunehmend erhöht, bis die autothermalen Bedingungen im vollen Betrieb erreicht werden, und die elektrische Vorerwärmung zu diesem Zeitpunkt unterbricht.

9. Verfahren zur hydrothermalen Oxidation wasserunlöslicher organischer Rückstände unter Verwendung des in den Ansprüchen 1 bis 6 beschriebenen Systems, **dadurch gekennzeichnet, dass** es mit Mischvorrichtungen zwischen jeweils zwei Reaktorabschnitten versehen ist, die die Möglichkeit gestatten, Ströme von Wasserstoffperoxid an zwei Zwischenpunkten des Reaktors einzuspritzen, wobei die Ströme als zusätzliche Sauerstoffquelle und Generator freier Radikale wirken, so dass die Oxidationsreaktion in dem Fall verstärkt wird, dass der Rückstand besonders oxidationsbeständig ist.

## Revendications

1. Système d'oxydation hydrothermale de résidus organiques insolubles dans l'eau comprenant :
- trois réacteurs tubulaires connectés en série, avec un système d'injection de courant à l'entrée et à la sortie de chacun d'eux,
- un système d'alimentation d'un courant aqueux au moyen d'une pompe haute pression avec un débit ajustable,
- un système d'alimentation d'un courant insoluble dans l'eau au moyen d'une pompe haute pression avec un débit ajustable,
- un système d'alimentation d'un courant d'air au moyen d'un compresseur haute pression avec un débit ajustable,
- un système d'alimentation de deux courants de peroxyde d'hydrogène au moyen d'une pompe haute pression avec un débit ajustable,
- un système de préchauffage du courant aqueux au moyen de résistances électriques pour démarrer le processus d'oxydation,
- un système d'échange de chaleur à tubes concentriques pour utiliser la chaleur générée dans les réacteurs,
- un système de conditionnement de l'effluent final pour son évacuation au moyen d'un refroidissement, d'une dépressurisation et d'une séparation des phases gazeuse et liquide.

2. Système d'oxydation hydrothermale de résidus organiques insolubles dans l'eau selon la revendication 1, **caractérisé en ce que** chacun des réacteurs tubulaires formant le système a un rapport longueur/diamètre interne qui est supérieur à 200, et est construit en alliage d'acier résistant à la corrosion et isolé à l'extérieur pour minimiser les pertes de chaleur.

3. Système d'oxydation hydrothermale de résidus organiques insolubles dans l'eau selon la revendication 1, **caractérisé en ce que** le système d'alimentation du courant insoluble dans l'eau permet d'introduire un résidu sans eau, avec un débit entre 1 et 10 % du débit correspondant au courant aqueux, à 250 bars au moyen d'une pompe haute pression avec un débit ajustable.

4. Système d'oxydation hydrothermale de résidus organiques insolubles dans l'eau selon la revendication 1, **caractérisé en ce que** les dispositifs de mélange utilisés dans le système d'injection à l'entrée du deuxième réacteur et du troisième réacteur pour injecter un courant non préchauffé de peroxyde d'hydrogène introduisent le courant additif dans une direction perpendiculaire au courant principal du système.

5. Système d'oxydation hydrothermale de résidus organiques insolubles dans l'eau selon la revendication 1, **caractérisé en ce que** le système d'échange de chaleur à tubes concentriques utilise l'énergie au moyen de la circulation à contre-courant de l'effluent et du courant aqueux, ce qui permet d'augmenter la température du courant aqueux de la température ambiante à au moins 400°C.

6. Système d'oxydation hydrothermale de résidus organiques insolubles dans l'eau selon les revendications 1 et 5, **caractérisé en ce que** le fluide de chauffage du système d'échange de chaleur à tubes concentriques circule à travers le tube interne et le fluide à chauffer circule à travers l'espace annulaire entre le tube interne et le tube externe, l'échangeur étant thermiquement isolé dans sa surface externe pour optimiser l'utilisation de l'énergie.

7. Procédé d'oxydation hydrothermale de résidus organiques insolubles dans l'eau qui, à l'aide du système décrit dans les revendications 1 à 6, est **caractérisé en ce que** le résidu insoluble est mélangé, sans chauffage préalable, avec le courant d'eau dans des conditions supercritiques avant d'être introduit dans le premier réacteur, un apport parfaitement miscible étant obtenu auquel le courant d'air préchauffé à une pression de 250 bars est par la suite ajouté.

8. Procédé d'oxydation hydrothermale de résidus organiques insolubles dans l'eau qui, à l'aide du système décrit dans les revendications 1 à 6, est **caractérisé par** un protocole de démarrage de système lançant l'opération avec l'addition de débits entre 10 et 20 % du débit théorique maximal, le courant aqueux étant préchauffé électriquement et à mesure que la réaction libère de la chaleur, tous les débits d'apport augmentent progressivement jusqu'à atteindre les conditions autothermiques en plein fonctionnement, moment auquel le préchauffage électrique est déconnecté.

9. Procédé d'oxydation hydrothermale de résidus organiques insolubles dans l'eau qui, à l'aide du système décrit dans les revendications 1 à 6, est **caractérisé par le fait qu'**il est équipé de dispositifs de mélange entre chaque deux sections de réacteur qui permettent la possibilité d'injecter des courants de peroxyde d'hydrogène en deux points intermédiaires du réacteur, lesquels courants agissent en tant que source supplémentaire d'oxygène et générateur de radicaux libres, de telle sorte que la réaction d'oxydation est potentialisée dans le cas où le résidu est particulièrement résistant à l'oxydation.
